# EUROPEAN PATENT APPLICATION

(11) **EP 3 174 003 A1**
(43) Date of publication of application: **31.05.2017**
(21) Application number: 16184992.2
(22) Date of filing: 19.08.2016
(51) Int. Cl.: G06Q 40/00

(54) **BILL PROCESSING METHOD AND APPARATUS, TERMINAL DEVICE, COMPUTER PROGRAM AND RECORDING MEDIUM**

(30) Priority: 24.11.2015 CN 201510824157
(71) Applicant: Xiaomi Inc., Beijing 100085 (CN)
(72) Inventor: LIU, Tiejun, Haidian District, Beijing 100085 (CN); ZHANG, Pengfei, Haidian District, Beijing 100085 (CN); LIN, Xingsheng, Haidian District, Beijing 100085 (CN)
(74) Representative: Kudlek, Franz Thomas

(57) **Abstract**

The present invention is related to a bill processing method and apparatus, a terminal device, a computer program and a recording medium. The method comprises: acquiring an electronic bill; identifying a wearable device identification corresponding to the electronic bill; and sending the electronic bill and the corresponding wearable device identification to a server, so that the server stores the electronic bill in a user account corresponding to the corresponding wearable device identification. By storing the electronic bill in the user account, there is no need for a paper bill and paper resources are saved. Meanwhile, storing the electronic bill in association with the user account corresponding to the wearable device identification by using the wearable device as a medium is easy to implement, extends the application of the wearable device and improves user experience.

## Description

### TECHNICAL FIELD

The present invention generally relates to the field of communications, and more particularly, to a bill processing method and apparatus, a terminal device, a computer program and a recording medium.

### BACKGROUND

Generally, when a customer performs payment after shopping in a supermarket or dinning in a restaurant, an attendant often prints and provides a paper bill to the customer. However, the paper bill tends to be thrown away by the customer carelessly, thereby resulting in a waste of paper resources.

In addition, wearable devices such as smart bracelets and smart watches have been widely used by people, mainly for monitoring their own exercise conditions and health conditions. However, extended application of wearable devices is rather limited.

### SUMMARY

The present invention provides a bill processing method and apparatus, a terminal device, a computer program and a recording medium, which eliminate the need for paper bills and allow effective management of electronic bills, thereby avoiding the waste of paper resources, extending the application of wearable devices and improving user experience.

According to a first aspect of the present invention, there is provided a bill processing method, comprising: acquiring an electronic bill; identifying a wearable device identification corresponding to the electronic bill; and sending the electronic bill and the corresponding wearable device identification to a server, so that the server stores the electronic bill in a user account corresponding to the corresponding wearable device identification.

In a first possible implementation of the first aspect, said identifying the wearable device identification corresponding to the electronic bill comprises: obtaining a wearable device identification provided by a user by scanning a two-dimension code that is provided by the user and comprises the wearable device identification, and taking the wearable device identification provided by the user as the corresponding wearable device identification; or reading, through near field communications, a wearable device identification provided by a user, and taking the wearable device identification provided by the user as the corresponding wearable device identification.

In a second possible implementation of the first aspect, said identifying the wearable device identification corresponding to the electronic bill comprises: receiving from wearable devices Bluetooth broadcast signals, which comprise respective wearable device identifications; taking a wearable device identification derived from one of the Bluetooth broadcast signals which has a maximum signal strength as the corresponding wearable device identification.

In a third possible implementation of the first aspect according to the first aspect or the first or the second possible implementation of the first aspect, the method further comprises: acquiring the user account by querying the server based on the corresponding wearable device identification; and sending prompt information carrying the user account to the user corresponding to the user account.

In a fourth possible implementation of the first aspect according to the third possible implementation of the first aspect, the method further comprises: upon receiving a confirmation indication which is fed back by the user based on the prompt information, sending the electronic bill and the user account to the server, so that the server stores the electronic bill in the user account; upon receiving a rejection indication, which is fed back by the user based on the prompt information, stopping the bill processing.

According to a second aspect of the invention, there is provided a bill processing method, comprising: receiving an electronic bill and a wearable device identification corresponding to the electronic bill; storing the electronic bill in a user account corresponding to the corresponding wearable device identification. A preferred embodiment of the invention especially comprises a bill processing method comprising the first and the second aspect as mentioned above. This preferred embodiment can comprise any one of the frist to fourth implementations mentioned above.

In a first possible implementation of the second aspect, the method further comprises: receiving a bill query request sent by a terminal device, the bill query request comprising the user account; acquiring the electronic bill stored in the user account and/or an expense amount corresponding to the electronic bill; and sending a query response to the terminal device.

According to a third aspect of the invention, there is provided a bill processing apparatus, comprising: a first acquiring module configured to acquire an electronic bill; an identifying module configured to identify a wearable device identification corresponding to the electronic bill; and a first sending module configured to send the electronic bill and the corresponding wearable device identification to a server, so that the server stores the electronic bill in a user account corresponding to the corresponding wearable device identification.

In a first possible implementation of the third aspect, the identifying module comprises: a scanning sub-module configured to obtain a wearable device identification provided by a user by scanning a two-dimension code which is provided by the user and which comprises the wearable device identification and to take the wearable device identification provided by the user as the corresponding wearable device identification; or a reading sub-module configured to read, through near field communications, a wearable device identification provided by a user and to take the wearable device identification provided by the user as the corresponding wearable device identification.

In a second possible implementation of the third aspect, the identifying module further comprises: a receiving sub-module configured to receive from wearable devices Bluetooth broadcast signals, which comprise respective wearable device identifications; and a deriving sub-module configured to take a wearable device identification derived from one of the Bluetooth broadcast signals which has a maximum signal strength as the corresponding wearable device identification.

In a third possible implementation of the third aspect according to the third aspect or the first or the second possible implementation of the third aspect, the apparatus further comprises: a second acquiring module configured to acquire the user account by querying the server based on the corresponding wearable device identification; and a second sending module configured to send prompt information carrying the user account to the user corresponding to the user account.

In a fourth possible implementation of the third aspect according to the third possible implementation of the third aspect, the apparatus further comprises: a receiving module configured to receive an indication which is fed back by the user based on the prompt information; a third sending module configured to send the electronic bill and the user account to the server so that the server stores the electronic bill in the user account, when the receiving module receives a confirmation indication which is fed back by the user based on the prompt information; a processing stopping module configured to stop the bill processing, when the receiving module receives a rejection indication which is fed back by the user based on the prompt information.

According to a fourth aspect of the invention, there is provided a bill processing apparatus, comprising: a first receiving module configured to receive an electronic bill and a wearable device identification corresponding to the electronic bill; a storing module configured to store the electronic bill in a user account corresponding to the corresponding wearable device identification. A preferred embodiment of the invention especially comprises a bill processing apparatus comprising the third aspect and the fourth aspect as mentioned above. This preferred embodiment can comprise any one of the first to fourth implementations of the third aspect.

In a further possible implementation of the first aspect, the apparatus further comprises: a second receiving module configured to receive a bill query request sent by a terminal device, the bill query request comprising the user account; an acquiring module configured to acquire the electronic bill stored in the user account and/or an expense amount corresponding to the electronic bill; and a sending module configured to send a query response to the terminal device.

According to a fifth aspect of the invention, there is provided a terminal device, comprising: a processor; and a memory configured to store instructions executable by the processor. The processor is configured to: acquire an electronic bill; identify a wearable device identification corresponding to the electronic bill; and send the electronic bill and the corresponding wearable device identification to a server, so that the server stores the electronic bill in a user account corresponding to the corresponding wearable device identification.

According to a sixth aspect of the invention, there is provided a server, comprising: a processor; and a memory configured to store instructions executable by the processor. The processor is configured to: receive an electronic bill and a wearable device identification corresponding to the electronic bill; store the electronic bill in a user account corresponding to the corresponding wearable device identification.

In one particular embodiment, the steps of the bill processing method are determined by computer program instructions.

Consequently, according to a seventh aspect, the invention is also directed to a computer program for executing the steps of a bill processing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may have the following advantageous effects.

When a user needs to perform payment, an electronic bill for the payment is generated. After the user completes the payment, the electronic bill is acquired and a wearable device identification is identified, so that the electronic bill and the wearable device identification corresponding to the electronic bill are sent to a server. The server stores the electronic bill in a user account corresponding to the wearable device identification, for storing and managing the electronic bill. By storing the electronic bill in the user account, there is no need for a paper bill and paper resources are saved. Meanwhile, storing the electronic bill in association with the user account corresponding to the wearable device identification by using the wearable device as a medium is easy to implement, extends the application of the wearable device and improves user experience.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a first bill processing method according to an exemplary embodiment;
Fig. 2 is a flow chart showing a second bill processing method according to an exemplary embodiment;
Fig. 3 is a flow chart showing a third bill processing method according to an exemplary embodiment;
Fig. 4 is a flow chart showing a fourth bill processing method according to an exemplary embodiment;
Fig. 5 is a flow chart showing a fifth bill processing method according to an exemplary embodiment;
Fig. 6 is a block diagram showing a first bill processing apparatus according to an exemplary embodiment;
Fig. 7 is a block diagram showing a second bill processing apparatus according to an exemplary embodiment;
Fig. 8 is a block diagram showing a third bill processing apparatus according to an exemplary embodiment;
Fig. 9 is a block diagram showing another first bill processing apparatus according to an exemplary embodiment;
Fig. 10 is a block diagram showing another second bill processing apparatus according to an exemplary embodiment;
Fig. 11 is a block diagram showing a terminal device according to an exemplary embodiment;
Fig. 12 is a block diagram showing another terminal device according to an exemplary embodiment;
Fig. 13 is a block diagram showing a server according to an exemplary embodiment;
Fig. 14 is a block diagram showing another server according to an exemplary embodiment.

The above drawings illustrate specific embodiments of the invention which will be described in detail hereinafter. These drawings and description are not intended to limit the scope of the inventive concept in any way but to explain the concept of the invention to those skilled in the art by referring to the specific embodiments.

### DETAILED DESCRIPTION

Reference will now be made in detail to certain embodiments, examples of which are illustrated in the accompanying drawings. The following description refers to the accompanying drawings in which the same numbers in different figures represent the same or similar elements unless otherwise indicated. The implementations set forth in the following description do not represent all implementations consistent with the invention. Instead, they are merely examples of devices and methods consistent with aspects related to the invention as recited in the appended claims.

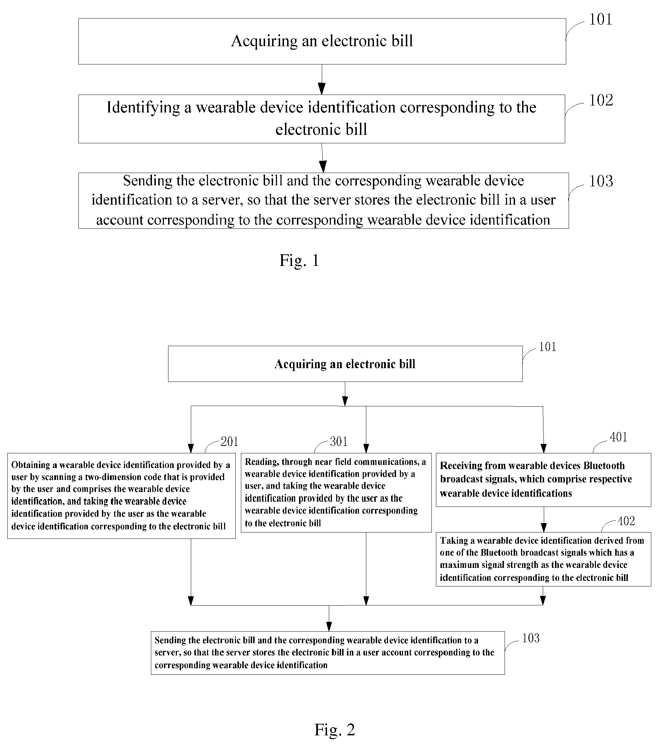

Fig. 1 is a flow chart showing a first bill processing method according to an exemplary embodiment. The method may be performed by a bill processing apparatus, which may be an APP or a terminal device. As shown in Fig. 1, the method comprises the following steps.

In step 101, an electronic bill is acquired.

In step 102, a wearable device identification corresponding to the electronic bill is identified.

In step 103, the electronic bill and the corresponding wearable device identification are sent to a server, so that the server stores the electronic bill in a user account corresponding to the corresponding wearable device identification.

Taking an example where a user goes to a supermarket for shopping, when the user checks out after shopping, a cashier in the supermarket generates a corresponding electronic bill by scanning codes on goods and prompts the user to perform payment according to the amount on the electronic bill, as is the conventional checkout process.

After the user completes the payment, the method according to this embodiment is triggered to manage the electronic bill.

For example, if the user wears a wearable device such as a smart bracelet, a smart watch, etc., storage of the user's electronic bill can be realized by virtue of the wearable device.

Generally, when the wearable device is used for the first time, it goes through a registration process in a server. During the registration, the user creates a user account. Meanwhile, the server prompts the user to input an identification of his/her wearable device, so as to store the user account in association with the wearable device identification, namely, store the user account and the wearable device identification in a binding manner.

The wearable device identification may be an MAC address of the wearable device for uniquely identifying the wearable device. Moreover, a plurality of different wearable device identifications may be associated with the same user account.

In practical bill processing, when the user completes the payment, an identifying apparatus may be arranged at the checkout counter. After the user's electronic bill is acquired, the identification of the user's wearable device is identified in one of various possible manners, which will be described by way of example in the following embodiments.

After the identification of the user's wearable device is identified, the wearable device identification and the electronic bill are sent together to the server corresponding to the wearable device. According to a correspondence between the registered wearable device identification and the user account, the server determines the user account corresponding to the identified wearable device identification, so as to electronically store the electronic bill under the user account.

In practical implementation, after the electronic bill is stored under the user account, the user may access the server using an APP in his/her terminal device (such as smart phone) which corresponds to the wearable device, to query about his/her consumptions during a period of time for collecting information on his/her consumptions.

In this embodiment, when a user needs to perform payment, an electronic bill for the payment is generated. After the user completes the payment, the electronic bill is acquired and a wearable device identification is identified, so that the electronic bill and the wearable device identification corresponding to the electronic bill are sent to a server. The server stores the electronic bill in a user account corresponding to the wearable device identification, for storing and managing the electronic bill. By storing the electronic bill in the user account, there is no need for a paper bill and paper resources are saved. Meanwhile, storing the electronic bill in association with the user account corresponding to the wearable device identification by using the wearable device as a medium is easy to implement, extends the application of the wearable device and improves user experience.

Fig. 2 is a flow chart showing a second bill processing method according to an exemplary embodiment. As shown in Fig. 2, the above step 102 may be implemented in the following optional manners.

According to a first manner, in step 201, a wearable device identification provided by a user is obtained by scanning a two-dimension code that is provided by the user and comprises the wearable device identification, and the wearable device identification provided by the user is taken as the corresponding wearable device identification.

In this implementation manner, the two-dimension code comprising the wearable device identification may be arranged on the external surface of the wearable device or displayed in response to the user's triggering operation. As such, the cashier can acquire the wearable device identification corresponding to the electronic bill by scanning using a scanner.

According to a second manner, in step 301, a wearable device identification provided by a user is read through near field communications, and the wearable device identification provided by the user is taken as the wearable device identification corresponding to the electronic bill.

In this implementation manner, an NFC reading apparatus may be arranged. Accordingly, a corresponding NFC communication module is provided in the wearable device. Through communications between the wearable device and the reading apparatus, the reading apparatus can read the wearable device identification provided by the user and take it as the wearable device identification corresponding to the acquired electronic bill.

According to a third manner, in step 401, Bluetooth broadcast signals are received from wearable devices, the Bluetooth broadcast signals comprising respective wearable device identifications.

In step 402, a wearable device identification derived from one of the Bluetooth broadcast signals which has a maximum signal strength is taken as the wearable device identification corresponding to the electronic bill.

In this implementation manner, a Bluetooth apparatus may be arranged. Accordingly, a Bluetooth communication module is provided in the wearable device. As compared with the first and the second implementation manners which ensure certainty of one-to-one identifying (that is, even though there are many other users wearing wearable devices near the user corresponding to the electronic bill, only a single wearable device identification can be identified as corresponding to one electronic bill due to the inherent nature of the above two implementation manners), the Bluetooth manner suffers from uncertainty, namely, multiple wearable device identifications may be identified as corresponding to one electronic bill.

Therefore, when there are other persons wearing wearable devices having their Bluetooth functions enabled near the user corresponding to the electronic bill, the wearable devices will send out broadcast signals, that is, the above-mentioned Bluetooth broadcast signals, respectively. The broadcast signals contain identifications of the respective wearable devices.

To avoid errors in the identifying, in this embodiment, the wearable device identification corresponding to the electronic bill is identified based on the signal strengths of the received broadcast signals.

In an actual application scenario (for example, in a supermarket), when queuing for checkout, a user who is checking out will stand more closer to a checkout counter than other users; or when a cashier prompts the user that he/she can store his/her electronic bill in a server by virtue of his/her wearable device, the user will deliberately move his/her wearable device close to the Bluetooth apparatus arranged at the checkout counter. In case the surrounding environment is the same, the received signal strength of the Bluetooth broadcast signal from the user's wearable device will be higher than those of the Bluetooth broadcast signals from others' wearable devices.

As such, the wearable device identification derived from one of the broadcast signals which has a maximum signal strength can be taken as the wearable device identification corresponding to the electronic bill.

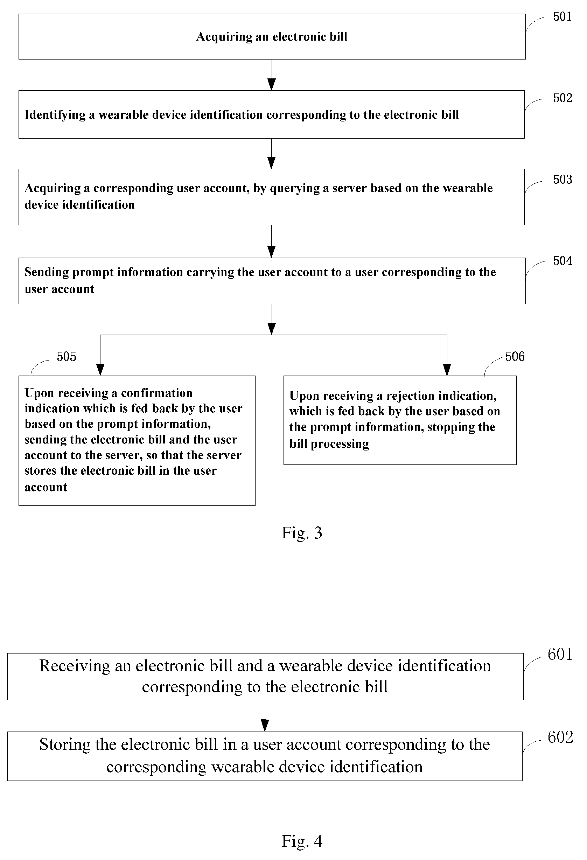

Fig. 3 is a flow chart showing a third bill processing method according to an exemplary embodiment. As shown in Fig. 3, the method may comprise the following steps.

In step 501, an electronic bill is acquired.

In step 502, a wearable device identification corresponding to the electronic bill is identified.

These steps are consistent with corresponding steps in the embodiment shown in Fig. 1 and will be not described redundantly.

In step 503, a corresponding user account is acquired by querying a server based on the wearable device identification.

In step 504, prompt information carrying the user account is sent to a user corresponding to the user account.

In step 505, when a confirmation indication which is fed back by the user based on the prompt information is received, the electronic bill and the user account are sent to the server, so that the server stores the electronic bill in the user account.

In step 506, when a rejection indication, which is fed back by the user based on the prompt information, is received, the bill processing is stopped.

It can be appreciated that the order of the above steps 505 and 506 is not restricted.

In this embodiment, to further improve user experience and further ensure accurate storage of the electronic bill, interaction with the user is performed.

For example, after a wearable device identification is identified, the server is queried based on the wearable device identification to obtain a corresponding user account, such as a user name. As such, by displaying prompt information on the display screen, the user name is displayed to the user, so as to prompt the user to confirm whether it is his/her user account.

If the user confirms that it is his/her user account and that the electronic bill needs to be stored in the server, the electronic bill and the user account can be sent to the server based on the user's confirmation indication, so that the server stores the electronic bill in the user account.

Otherwise, if the user confirms that it is not his/her user account or that the electronic bill does not need to be stored in the server, the bill processing can be stopped based on the user's rejection indication. That is, the electronic bill will not be stored in the user account.

In this embodiment, by performing interaction with the user, the user can himself/herself decide whether to store the electronic bill, thereby improving user experience while ensuring accurate storage of the electronic bill.

Fig. 4 is a flowchart showing a fourth bill processing method according to an exemplary embodiment. The method is performed by a server. As shown in Fig. 4, the method comprises the following steps.

In step 601, an electronic bill and a wearable device identification corresponding to the electronic bill are received.

In step 602, the electronic bill is stored in a user account corresponding to the corresponding wearable device identification.

For example, in case the user wears a wearable device such as a smart bracelet, a smart watch etc., storage of the user's electronic bill can be realized by virtue of the wearable device.

After the user completes the payment, the method according to this embodiment is triggered to manage the electronic bill. For example, when the user completes the payment, an identifying apparatus may be arranged at the checkout counter. After the user's electronic bill is acquired, the identification of the user's wearable device is identified, so that the electronic bill and the wearable device identification corresponding to the electronic bill are sent to the server.

Because a user's user account is registered in the server when the user uses his/her wearable device for the first time, the server stores a correspondence between the registered user account and the identification of the wearable device. Therefore, after the server receives the electronic bill and the wearable device identification corresponding to the electronic bill, it can determine the corresponding user account based on the wearable device identification, so as to store the electronic bill under the user account, namely, in storage space corresponding to the user account.

For the process of acquiring the wearable device identification corresponding to the electronic bill, reference can be made to those implementation manners in the embodiment shown in Fig. 2 and description thereof will not be given redundantly.

In this embodiment, storage and management of the electronic bill in the server are realized by virtue of the wearable device, making it convenient for the user to collect information on his/her consumptions and to get knowledge of his/her consumptions in time, thereby improving user experience.

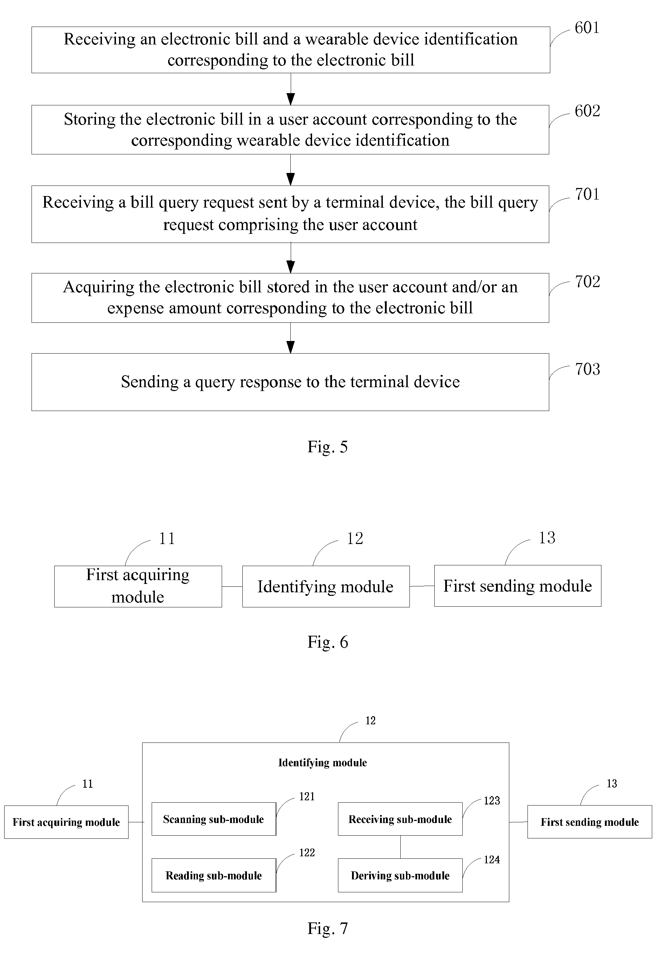

Fig. 5 is a flow chart showing a fifth bill processing method according to an exemplary embodiment. As shown in Fig. 5, after the above step 602, the method may further comprise the following steps.

In step 701, a bill query request sent by a terminal device is received, the bill query request comprising the user account.

In step 702, the electronic bill stored in the user account and/or an expense amount corresponding to the electronic bill are acquired.

In step 703, a query response is sent to the terminal device.

In this embodiment, the user can perform querying based on the electronic bill stored in the server, to get knowledge of his/her consumptions during a period of time conveniently.

For example, the user can send a query request to the server using a terminal device such as a mobile phone. The query request comprises the user's user account. It can be appreciated that the query request further comprises among others a time and an indication message. The time indicates a time period, so that information on electronic bill consumptions during this period is acquired. The indication message indicates that the query request is used to request querying about the electronic bill.

As such, the server acquires the corresponding electronic bill based on the query request, and can feed the electronic bill and/or an expense amount corresponding to the electronic bill back to the user's terminal device.

Fig. 6 is a block diagram showing a first bill processing apparatus according to an exemplary embodiment. As shown in Fig. 6, the apparatus comprises a first acquiring module 11, an identifying module 12 and a first sending module 13.

The first acquiring module 11 is configured to acquire an electronic bill.

The identifying module 12 is configured to identify a wearable device identification corresponding to the electronic bill.

The first sending module 13 is configured to send the electronic bill and the corresponding wearable device identification to a server, so that the server stores the electronic bill in a user account corresponding to the corresponding wearable device identification.

The bill processing apparatus provided by this embodiment may be used to perform the technical solution of the method embodiment shown in Fig. 1.

In this embodiment, when a user needs to perform payment and completes the payment, the first acquiring module 11 acquires the paid electronic bill and the identifying module 12 identifies a wearable device identification, so that the electronic bill and the wearable device identification corresponding to the electronic bill are sent by the first sending module 13 to a server. The server stores the electronic bill in a user account corresponding to the wearable device identification, for storing and managing the electronic bill. By storing the electronic bill in the user account, there is no need for a paper bill and paper resources are saved. Meanwhile, storing the electronic bill in association with the user account corresponding to the wearable device identification by using the wearable device as a medium is easy to implement, extends the application of the wearable device and improves user experience.

Fig. 7 is a block diagram showing a second bill processing apparatus according to an exemplary embodiment. As shown in Fig. 7, further to the embodiment shown in Fig. 6, the identifying module 12 comprises a scanning sub-module 121 or a reading sub-module 122 or comprises a receiving sub-module 123 and a deriving sub-module 124.

The scanning sub-module 121 is configured to obtain a wearable device identification provided by a user by scanning a two-dimension code which is provided by the user and which comprises the wearable device identification and to take the wearable device identification provided by the user as the corresponding wearable device identification.

The reading sub-module 122 is configured to read, through near field communications, a wearable device identification provided by a user and to take the wearable device identification provided by the user as the corresponding wearable device identification.

The receiving sub-module 123 is configured to receive from wearable devices Bluetooth broadcast signals, which comprise respective wearable device identifications.

The deriving sub-module 124 is configured to take a wearable device identification derived from one of the Bluetooth broadcast signals which has a maximum signal strength as the corresponding wearable device identification.

The bill processing apparatus provided by this embodiment may be used to perform the technical solution of the method embodiment shown in Fig. 2.

Optionally, the two-dimension code comprising the wearable device identification may be arranged on the external surface of the wearable device or displayed in response to the user's triggering operation. As such, the cashier can acquire the wearable device identification corresponding to the electronic bill by scanning using a scanning sub-module 121.

Optionally, a NFC communication module is provided in the wearable device. Through communications between the wearable device and the reading apparatus 122, the reading sub-module 122 can read the wearable device identification corresponding to the electronic bill.

Optionally, a Bluetooth communication module is provided in the wearable device to send out a Bluetooth broadcast signal carrying the wearable device identification. By receiving Bluetooth broadcast signals sent out by respective wearable devices having Bluetooth communication modules, the receiving sub-module 123 enables the deriving sub-module 124 to derive the wearable device identification corresponding to the electronic bill from one of the Bluetooth broadcast signals which has a maximum signal strength.

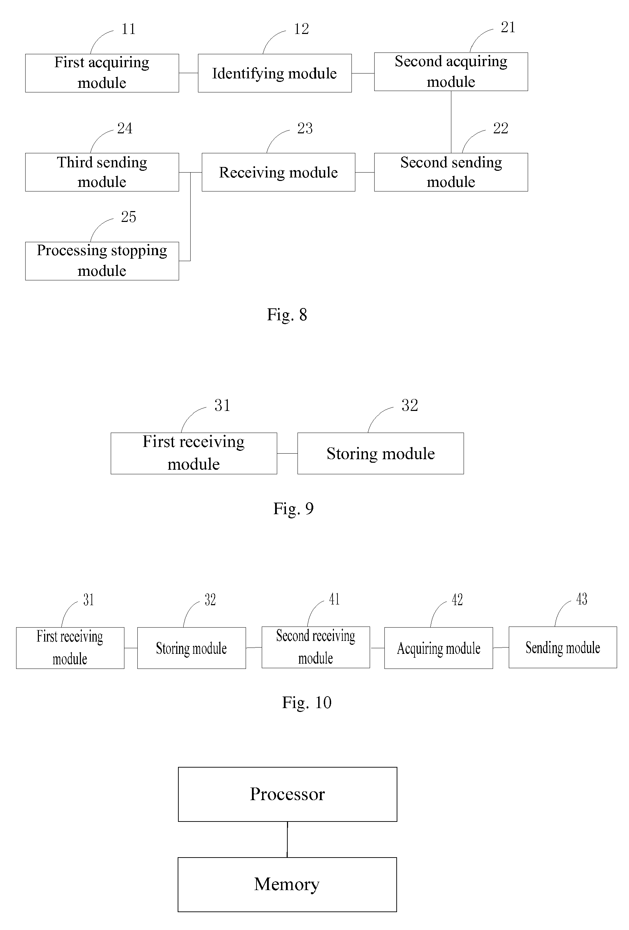

Fig. 8 is a block diagram showing a third bill processing apparatus according to an exemplary embodiment. As shown in Fig. 8, further to the above embodiment, the apparatus comprises a second acquiring module 21, a second sending module 22, a receiving module 23, a third sending module 24 and a processing stopping module 25.

The second acquiring module 21 is configured to acquire the user account by querying the server based on the corresponding wearable device identification.

The second sending module 22 is configured to send prompt information carrying the user account to the user corresponding to the user account.

The receiving module 23 is configured to receive an indication which is fed back by the user based on the prompt information.

The third sending module 24 is configured to send the electronic bill and the user account to the server so that the server stores the electronic bill in the user account, when the receiving module 23 receives a confirmation indication which is fed back by the user based on the prompt information.

The processing stopping module 25 is configured to stop the bill processing, when the receiving module 23 receives a rejection indication which is fed back by the user based on the prompt information.

The bill processing apparatus provided by this embodiment may be used to perform the technical solution of the method embodiment shown in Fig. 3.

After the identifying module 12 identifies a wearable device identification, the second acquiring module 21 can query the server based on the wearable device identification to obtain a corresponding user account, such as a user name. As such, by displaying prompt information on the display screen, the second sending module 22 can display the user name to the user, so as to prompt the user to confirm whether it is his/her user account.

If the user confirms that it is his/her user account and that the electronic bill needs to be stored in the server, the third sending module 24 can send the electronic bill and the user account to the server based on the user's confirmation indication, so that the server stores the electronic bill in the user account.

Otherwise, if the user confirms that it is not his/her user account or that the electronic bill does not need to be stored in the server, the receiving module 23 will receive the user's rejection indication and the processing stopping module 25 can stop the bill processing based on the user's rejection indication. That is, the electronic bill will not be stored in the user account.

In this embodiment, by performing interaction with the user, the user can himself/herself decide whether to store the electronic bill, thereby improving user experience while ensuring accurate storage of the electronic bill.

Fig. 9 is a block diagram showing another first bill processing apparatus according to an exemplary embodiment. As shown in Fig. 9, the bill processing apparatus comprises a first receiving module 31 and a storing module 32.

The first receiving module 31 is configured to receive an electronic bill and a wearable device identification corresponding to the electronic bill.

The storing module 32 is configured to store the electronic bill in a user account corresponding to the corresponding wearable device identification.

For example, in case the user wears a wearable device such as a smart bracelet, a smart watch etc., storage of the user's electronic bill can be realized by virtue of the wearable device.

After the user completes the payment, the method according to this embodiment is triggered to manage the electronic bill. For example, when the user completes the payment, an identifying apparatus may be arranged at the checkout counter. After the user's electronic bill is acquired, the identification of the user's wearable device is identified, so that the electronic bill and the wearable device identification corresponding to the electronic bill are sent to the server. The first receiving module 31 in the server receives the electronic bill and the wearable device identification corresponding to the electronic bill.

Because a user's user account is registered in the server when the user uses his/her wearable device for the first time, the server stores a correspondence between the registered user account and the identification of the wearable device. Therefore, after the first receiving module 31 receives the electronic bill and the wearable device identification corresponding to the electronic bill, the storing module 32 can determine the corresponding user account based on the wearable device identification, so as to store the electronic bill under the user account, namely, in storage space corresponding to the user account.

For the process of acquiring the wearable device identification corresponding to the electronic bill, reference can be made to those implementation manners in the embodiment shown in Fig. 2 and description thereof will not be given redundantly.

In this embodiment, storage and management of the electronic bill in the server are realized by virtue of the wearable device, making it convenient for the user to collect information on his/her consumptions and to get knowledge of his/her consumptions in time, thereby improving user experience.

Fig. 10 is a block diagram showing another second bill processing apparatus according to an exemplary embodiment. As shown in Fig. 10, further to the embodiment shown in Fig. 9, the bill processing apparatus comprises a second receiving module 41, an acquiring module 42 and a sending module 43.

The second receiving module 41 is configured to receive a bill query request sent by a terminal device, the bill query request comprising the user account.

The acquiring module 42 is configured to acquire the electronic bill stored in the user account and/or an expense amount corresponding to the electronic bill.

The sending module 43 is configured to send a query response to the terminal device.

In this embodiment, the user can perform querying based on the electronic bill stored in the server, to get knowledge of his/her consumptions during a period of time conveniently.

For example, the user can send a query request to the server using a terminal device such as a mobile phone. The query request comprises the user's user account. It can be appreciated that the query request further comprises among others a time and an indication message. The time indicates a time period, so that information on electronic bill consumptions during this period is acquired. The indication message indicates that the query request is used to request querying about the electronic bill.

As such, after the second receiving module 41 receives the query request, the acquiring module 42 acquires the corresponding electronic bill and an expense amount corresponding to the electronic bill from the user account. Then, the electronic bill or the expense amount corresponding to the electronic bill can be fed back by the sending module 43 to the user's terminal device.

Detailed operations performed by modules and sub-modules of the bill processing apparatus in the above embodiments have been described in the embodiments of related method embodiments, and will not be described here in detail any more.

In the foregoing, internal functions and structures of the bill processing apparatus are described. As shown in Fig. 11, in practice, the bill processing apparatus may be implemented as a terminal device, which comprises a processor and a memory for storing instructions executable by the processor. The processor is configured to: acquire an electronic bill; identify a wearable device identification corresponding to the electronic bill; and send the electronic bill and the corresponding wearable device identification to a server, so that the server stores the electronic bill in a user account corresponding to the corresponding wearable device identification.

In this embodiment, when a user needs to perform payment, an electronic bill for the payment is generated. After the user completes the payment, the electronic bill is acquired and a wearable device identification is identified, so that the electronic bill and the wearable device identification are sent to a server. The server stores the electronic bill in a user account corresponding to the wearable device identification, for storing and managing the electronic bill. By storing the electronic bill in the user account, there is no need for a paper bill and paper resources are saved. Meanwhile, storing the electronic bill in association with the user account corresponding to the wearable device identification by using the wearable device as a medium is easy to implement, extends the application of the wearable device and improves user experience.

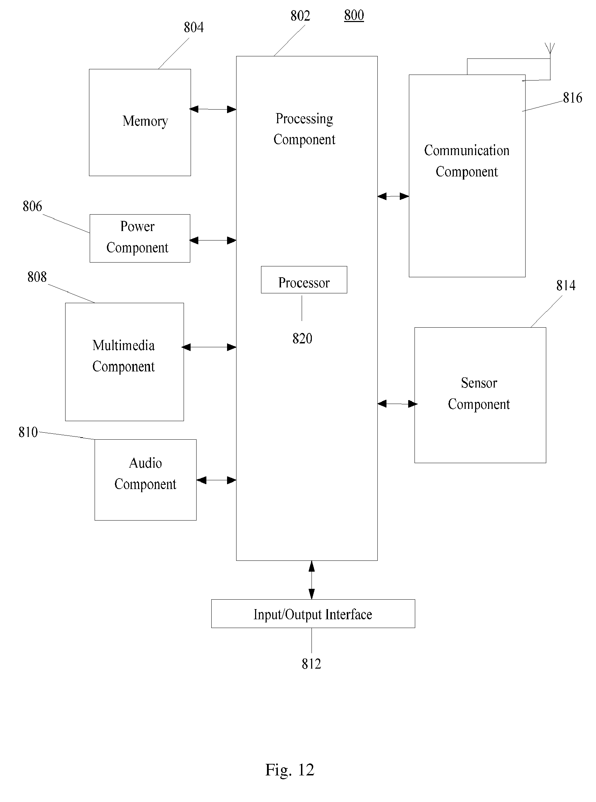

Fig. 12 is a block diagram showing another terminal device according to an exemplary embodiment. For example, the terminal device 800 may be a mobile phone, a computer, a digital broadcast terminal, a messaging device, a gaming console, a tablet, a medical device, exercise equipment, a personal digital assistant or the like.

Referring to Fig. 12, the terminal device 800 may include one or more of the following components: a processing component 802, a memory 804, a power component 806, a multimedia component 808, an audio component 810, an input/output (I/O) interface 812, a sensor component 814 and a communication component 816.

The processing component 802 generally controls the overall operations of the terminal device 800, for example, display, phone call, data communication, camera operation and record operation. The processing component 802 may include one or more processors 820 to implement an instruction to complete all or part of the steps of the above methods. In addition, the processing component 802 may include one or more modules to facilitate the interaction between the processing component 802 and other components. For example, the processing component 802 may include a multimedia module to facilitate the interaction between the processing component 808 and the processing component 802.

The memory 804 is configured to store various types of data to support the operation performed on the device 800. The examples of such data include an instruction of any application program or method, contact data, address book data, massages, pictures, videos, etc. which are operated on the device 800. The memory 804 may be realized with any kind of a volatile and non-volatile storage device or combination thereof, for example, Static Random Access Memory (SRAM), Electrically-Erasable Programmable Read Only Memory (EEPROM), Erasable Programmable Read Only Memory (EPROM), Programmable Read Only Memory (PROM), Read Only Memory (ROM), a magnetic memory, a flash memory, a magnetic disk or an optical disk.

The power component 806 provides power for various components of the terminal device 800. The power component 806 may include a power supply management system, one or more power supplies, and other components for generating, managing and distributing power to the terminal device 800.

The multimedia component 808 includes a screen providing an output interface between the terminal device 800 and the user. In some embodiments, the screen may include a Liquid Crystal Display (LCD) and a Touch Panel (TP). If the screen includes the touch panel, the screen may be realized as a touch screen to receive an input information from the user. The touch panel includes one or more touch sensors to sense the touching, sliding and the gestures on the touch panel. The touch sensor may not only sense the touching or border of sliding gesture but only detect the duration time and pressure related to touching or sliding operation. In some embodiments, the multimedia component 808 includes one front-facing camera and/or one rear-facing camera. When the terminal device 800 is in an operation mode, for example, a shooting mode or a video mode, the front-facing camera and/or the rear-facing camera may receive outside multimedia data. Each one of front-facing camera and rear-facing camera may be one fixed optical lens system or have focal length or optical zoom ability.

The audio component 810 is configured to output and/or input audio information. For example, the audio component 810 includes one microphone (MIC). When the terminal device 800 is in the operation mode, for example, a calling mode, a record mode and a speech recognition mode, the microphone is configured to receive outside audio information. The received audio information may be further stored in the memory 804 or sent via the communication component 816. In some embodiments, the audio component 810 includes may include a speaker configured to output audio information.

The I/O interface 812 provides an interface between the processing component 802 and a peripheral interface module. The above peripheral interface module may be a keyboard, a click wheel, and button, etc. The button may include but not limit to home page button, volume button, start button and lock button.

The sensor component 814 includes one or more sensors and is configured to provide various aspects of the assessment state for the terminal device 800. For example, the sensor component 814 may detect the on/off state of the terminal device 800, the relative positioning of the components (for example, the components are display and a keypad of the terminal device 800), position change of the terminal device 800 or one component of the terminal device 800, presence or absence of the touch between the user and the terminal device 800, as well as the orientation or acceleration/deceleration and temperature change of the terminal device 800. The sensor component 814 may include a proximity sensor configured to detect the presence of an adjacent object when there is not any physical contact. The sensor component 814 may also include an optical sensor (such as CMOS or a CCD image sensor) configured to be used in imaging application. In some embodiments, the sensor component 814 may also include an acceleration sensor, a gyro sensor, a magnetic sensor, a pressure sensor or a temperature sensor.

The communication component 816 is configured to facilitate the wired or wireless communication between the terminal device 800 and other apparatuses. The terminal device 800 may access the wireless network based on a communication standard, such as WiFi, 2G or 3G, or a combination thereof. In one exemplary embodiment, the communication component 816 receives a broadcast information or broadcast associated information from an external broadcast management system via a broadcast channel. In one exemplary embodiment, the communication component 816 also includes a Near Field Communication (NFC) module to facilitate short-range communication. For example, the NFC module may be based on Radio Frequency Identification (RFID) technology, Infrared Data Association (IrDA) technology, Ultra-Wideband (UWB) technology, Bluetooth (BT) technology and other technologies.

In an exemplary embodiment, the terminal device 800 may be realized through one or more Application Specific Integrated Circuits (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, or other electronic elements, and configured to carry out the aforementioned methods.

In an exemplary embodiment, a non-transitory computer-readable storage medium comprising the instruction is also provided, for example, the memory 804 including the instruction. The above instruction may be carried out by the processor 820 of the terminal device 800 to complete the above methods. For example, the non-transitory computer-readable storage medium may be a ROM, a random access memory (RAM), a CD-ROM, a magnetic tape, a floppy disk, an optical data storage devices and the like.

There is provided a non-transitory computer-readable storage medium having stored therein instructions that, when executed by a processor of a mobile terminal, cause the mobile terminal to perform a bill processing method, the method comprising: acquiring an electronic bill; identifying a wearable device identification corresponding to the electronic bill; and sending the electronic bill and the corresponding wearable device identification to a server, so that the server stores the electronic bill in a user account corresponding to the corresponding wearable device identification

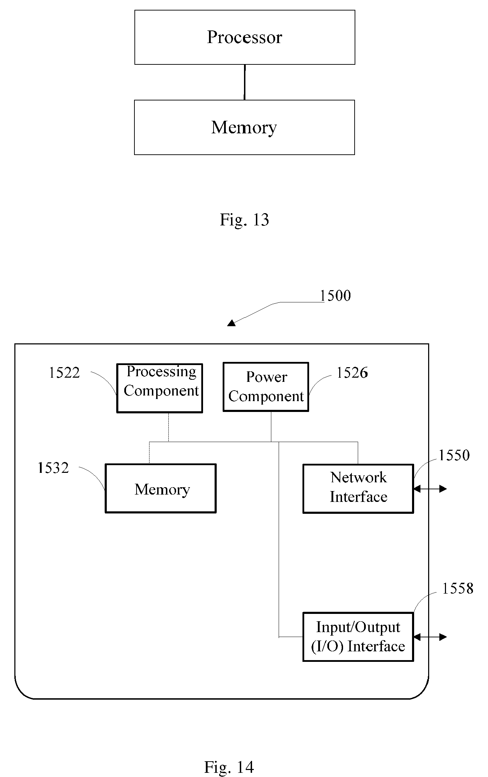

In addition, as shown in Fig. 13, in practice, the above-mentioned another bill processing apparatus may implemented as a server, which comprises a processor and a memory for storing instructions executable by the processor. The processor is configured to: receive an electronic bill and a wearable device identification corresponding to the electronic bill; store the electronic bill in a user account corresponding to the corresponding wearable device identification.

Fig. 14 is a block diagram showing another server according to an exemplary embodiment. Referring to Fig. 14, the server 1500 includes a processing component 1522 which further includes one or more processors, and memory resources that a memory 1532 represents for storing instructions executable by the processing component 1522, e.g., applications. The application programs stored in the memory 1532 may include one or more modules each corresponding to a set of instructions. In addition, the processing component 1522 is configured to execute instructions, so as to implement the above method which comprises: receiving an electronic bill and a wearable device identification corresponding to the electronic bill; storing the electronic bill in a user account corresponding to the corresponding wearable device identification.

The server 1500 may further include a power component 1526 configured to perform power management for the apparatus 1500, a wired or wireless network interface 1550 configured to connect the server 1500 to a network, and an input/output (I/O) interface 1558. The server 1500 can be operated based on an operating system stored in the memory 1532, e.g., Windows Server™, Mac OS X™, Unix™, Linux™, FreeBSD™ or the like.

Those skilled in the art may easily conceive other embodiments of the invention from consideration of the specification and practice of the present invention. This application is intended to cover any variations, uses, or adaptations of the invention following the general principles thereof and including such departures from the present invention as come within known or customary practice in the art. The specification and examples are intended to be exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A bill processing method, **characterized in that** it comprises:
acquiring (101) an electronic bill;
identifying (102) a wearable device identification corresponding to the electronic bill; and
sending (103) the electronic bill and the corresponding wearable device identification to a server, so that the server stores the electronic bill in a user account corresponding to the corresponding wearable device identification.

2. The method according to claim 1, **characterized in that** said identifying the wearable device identification corresponding to the electronic bill comprises:
obtaining (201) a wearable device identification provided by a user by scanning a two-dimension code that is provided by the user and comprises the wearable device identification, and taking the wearable device identification provided by the user as the corresponding wearable device identification; or
reading (301), through near field communications, a wearable device identification provided by a user, and taking the wearable device identification provided by the user as the corresponding wearable device identification.

3. The method according to claim 1, **characterized in that** said identifying (102) the wearable device identification corresponding to the electronic bill comprises:
receiving (401) from wearable devices Bluetooth broadcast signals, which comprise respective wearable device identifications;
taking (402) a wearable device identification derived from one of the Bluetooth broadcast signals which has a maximum signal strength as the corresponding wearable device identification.

4. The method according to any of claims 1-3, **characterized by** further comprising:
acquiring (503) the user account by querying the server based on the corresponding wearable device identification; and
sending (504) prompt information carrying the user account to the user corresponding to the user account.

5. The method according to claim 4, **characterized by** further comprising:
upon receiving a confirmation indication which is fed back by the user based on the prompt information, sending (505) the electronic bill and the user account to the server, so that the server stores the electronic bill in the user account;
upon receiving a rejection indication, which is fed back by the user based on the prompt information, stopping (506) the bill processing.

6. A bill processing method, especially according to any one of the preceding claims **characterized in that** it comprises:
receiving (601) an electronic bill and a wearable device identification corresponding to the electronic bill;
storing (602) the electronic bill in a user account corresponding to the corresponding wearable device identification.

7. A bill processing apparatus, **characterized in that** it comprises:
a first acquiring module (11) configured to acquire an electronic bill;
an identifying module (12) configured to identify a wearable device identification corresponding to the electronic bill; and
a first sending module (13) configured to send the electronic bill and the corresponding wearable device identification to a server, so that the server stores the electronic bill in a user account corresponding to the corresponding wearable device identification.

8. The apparatus according to claim 7, **characterized in that** the identifying module (12) comprises:
a scanning sub-module (121) configured to obtain a wearable device identification provided by a user by scanning a two-dimension code which is provided by the user and which comprises the wearable device identification and to take the wearable device identification provided by the user as the corresponding wearable device identification; or
a reading sub-module (122) configured to read, through near field communications, a wearable device identification provided by a user and to take the wearable device identification provided by the user as the corresponding wearable device identification.

9. The apparatus according to claim 7, **characterized in that** the identifying module (12) further comprises:
a receiving sub-module (123) configured to receive from wearable devices Bluetooth broadcast signals, which comprise respective wearable device identifications; and
a deriving sub-module (124) configured to take a wearable device identification derived from one of the Bluetooth broadcast signals which has a maximum signal strength as the corresponding wearable device identification.

10. The apparatus according to any of claims 7-9, **characterized by** further comprising:
a second acquiring module (21) configured to acquire the user account by querying the server based on the corresponding wearable device identification; and
a second sending module (22) configured to send prompt information carrying the user account to the user corresponding to the user account.

11. The apparatus according to claim 10, **characterized by** further comprising:
a receiving module (23) configured to receive an indication which is fed back by the user based on the prompt information;
a third sending module (24) configured to send the electronic bill and the user account to the server so that the server stores the electronic bill in the user account, when the receiving module receives a confirmation indication which is fed back by the user based on the prompt information;
a processing stopping module (25) configured to stop the bill processing, when the receiving module receives a rejection indication which is fed back by the user based on the prompt information.

12. A bill processing apparatus, especially according to any one of claims 7-10, **characterized in that** it comprises:
a first receiving module (31) configured to receive an electronic bill and a wearable device identification corresponding to the electronic bill;
a storing module (32) configured to store the electronic bill in a user account corresponding to the corresponding wearable device identification.

13. A terminal device, **characterized in that** it comprises:
a processor;
a memory configured to store instructions executable by the processor,
wherein the processor is configured to
acquire an electronic bill;
identify a wearable device identification corresponding to the electronic bill; and
send the electronic bill and the corresponding wearable device identification to a server, so that the server stores the electronic bill in a user account corresponding to the corresponding wearable device identification.

14. A computer program including instructions for executing the steps of a bill processing method according to any one of claims 1 to 5, when said program is executed by a computer.

15. A recording medium readable by a computer and having recorded thereon a computer program including instructions for executing the steps of a bill processing method according to any one of claims 1 to 5.
